# EUROPÄISCHE PATENTSCHRIFT

(11) **EP 3 694 375 B1**
(45) Veröffentlichungstag und Bekanntmachung des Hinweises auf die Patenterteilung: **19.05.2021**
(21) Anmeldenummer: 18782050.1
(22) Anmeldetag: 02.10.2018
(51) Int. Cl.: A47B 88/467

(54) **EINZUGSVORRICHTUNG UND VERFAHREN ZUM ÖFFNEN UND SCHLIESSEN EINES BEWEGBAREN MÖBELTEILS**
RETRACTION DEVICE AND METHOD FOR OPENING AND CLOSING A MOVABLE FURNITURE PART
DISPOSITIF DE RETRAIT ET PROCÉDÉ POUR L'OUVERTURE ET LA FERMETURE D'UNE PARTIE DE MEUBLE MOBILE

(30) Priorität: 11.10.2017 DE 102017123613
(43) Veröffentlichungstag der Anmeldung: 19.08.2020
(73) Patentinhaber: Paul Hettich GmbH & Co. KG, 32278 Kirchlengern (DE)
(72) Erfinder: STUFFEL, Andreas, 31675 Bückeburg (DE); BUHMEIER, Marvin, 32469 Petershagen (DE)
(74) Vertreter: Dantz, Jan Henning
(86) Internationale Anmeldenummer: PCT/EP2018/076765
(87) Internationale Veröffentlichungsnummer: WO 2019/072636

(56) Entgegenhaltungen:
- DE-U1-202012 008 995
- US-A1- 2006 016 279

## Beschreibung

Die vorliegende Erfindung betrifft eine Einzugsvorrichtung für bewegbare Möbelteile nach dem Oberbegriff des Anspruches 1 und ein Verfahren zum Öffnen und Schließen eines bewegbaren Möbelteils und Spannen und Entspannen einer Einzugsvorrichtung.

In der DE 20 2012 008 995 U1 ist eine Vorrichtung für die Bewegungsbeeinflussung eines Möbelteils offenbart, bei dem das Möbelteil über eine Auslöseaktion durch Eindrücken des Möbelteils in Schließrichtung geöffnet werden kann. Zur Einstellung der Schließposition des bewegbaren Möbelteils sind Justiermittel vorgesehen.

Die DE 20 2006 014 748 U1 offenbart eine Vorrichtung zum Einziehen eines beweglichen Möbelteils, bei der das bewegbare Möbelteil über einen Kraftspeicher in eine Schließstellung am Möbelkorpus einziehbar ist, und der Kraftspeicher durch ein Herausbewegen des bewegbaren Möbelteils aus der Schließstellung aufgeladen werden kann. Dabei sind Übertragungsmittel vorgesehen, durch welche im montierten Zustand der Vorrichtung eine aufzubringende Kraft zum Bewegen des bewegbaren Möbelteils aus der Schließstellung in eine geöffnete Position geringer ist als die vom Kraftspeicher in Einziehrichtung des bewegbaren Möbelteils bereitgestellte Kraft. Für die Übertragungsmechanik werden Ritzel und Zahnprofile eingesetzt, um eine entsprechende Kraftübertragung zu bewirken.

Zudem sind Selbsteinzugsvorrichtungen bekannt, wie sie beispielsweise in der DE 10 2014 106 796 offenbart sind. Eine Einzugsanordnung umfasst eine Einzugsfeder und ein zweites vorgespanntes Einzugselement, das ab einer Position zwischen der Parkposition und der Einzugsposition befindlichen Zwischenposition eine zusätzliche Einzugskraft aufbringt. Dadurch soll der Öffnungs- und Schließvorgang komfortabler gestaltet werden. Bei dem Einsatz mehrerer Federn kann zwar die Einzugskraft im Bereich kurz vor der Einzugsposition erhöht werden, allerdings ergibt sich beim Öffnungsvorgang das Problem, dass die Federkraft beim Öffnen ansteigt und beim Entkoppeln des bewegbaren Möbelteils von einer der Federn eine schlagartige Kraftreduzierung auftritt, die vom Benutzer als unangenehm empfunden wird.

Es ist daher Aufgabe der vorliegenden Erfindung, eine Einzugsvorrichtung für bewegbare Möbelteile zu schaffen, die eine verbesserte Handhabung aufweist. Zudem soll bei einem Verfahren zum Öffnen und Schließen eines bewegbaren Möbelteils ein sanftes Spannen und Entspannen der Einzugsvorrichtung erfolgen.

Diese Aufgabe wird mit einer Einzugsvorrichtung mit den Merkmalen des Anspruches 1 sowie einem Verfahren mit den Merkmalen des Anspruches 13 gelöst.

Bei der erfindungsgemäßen Einzugsvorrichtung wird das bewegbare Möbelteil über einen Aktivator in Schließrichtung mit einem Mitnehmer gekoppelt, während in Öffnungsrichtung eine Kopplung über einen Öffnungsaktivator und einen Öffnungsmitnehmer erfolgt. Der Öffnungsmitnehmer ist dabei über ein Übersetzungsgetriebe mit dem Mitnehmer gekoppelt, der den Mitnehmer bei einer Öffnungsbewegung von einer Einzugsposition in die Parkposition zieht, wobei die Wegstrecke des Öffnungsmitnehmers länger ist als die des Mitnehmers. Dadurch können bei einer Schließbewegung auf einer vergleichsweise kurzen Wegstrecke hohe Einzugskräfte bereitgestellt werden, während bei einer Öffnungsbewegung über eine entsprechend längere Wegstrecke nur geringere Kräfte überwunden werden müssen, was die Handhabung vereinfacht. Durch das Übersetzungsgetriebe kann eine optimierte Handhabung beim Öffnen und Schließen des bewegbaren Möbelteils bewirkt werden.

Erfindungsgemäß ist das Übersetzungsgetriebe ein Getriebe mit über die Bewegung des Öffnungsmitnehmers veränderlicher Übersetzung. Bei einer konstanten Bewegung des Öffnungsmitnehmers in Öffnungsrichtung kann beispielsweise die Bewegung des Mitnehmers von der Einzugsposition in die Parkposition langsamer werden. Dadurch kann die beim Öffnen erforderliche Kraft, anders als bei Zugfedern, verringert werden, indem die Bewegung des Mitnehmers vor Erreichen der Parkposition reduziert wird. Aufgrund des sich ändernden Übersetzungsverhältnisses kann die Bewegung des Mitnehmers relativ zum Öffnungsmitnehmer um mindestens 50 % langsamer sein und sich insbesondere kurz vor Erreichen der Parkposition weiter reduzieren. Dadurch wird das Ablegen des Öffnungsmitnehmers und des Mitnehmers in einer Parkposition für den Benutzer kaum noch spürbar, da beim Ablegen des Mitnehmers in die Parkposition nur noch geringe Kräfte überwunden werden müssen.

In einer weiteren Ausgestaltung weist die zweite Führungsbahn einen linearen Abschnitt und einen abgewinkelten Abschnitt auf, der einen Parkabschnitt für den Öffnungsmitnehmer bildet. Bei Anordnung des Öffnungsmitnehmers in dem abgewinkelten Abschnitt sind vorzugsweise der Öffnungsaktivator und der Öffnungsmitnehmer voneinander entkoppelt, und zudem ist der Mitnehmer in der Parkposition angeordnet. Dadurch kann das bewegbare Möbelteil beim Ablegen des Mitnehmers und des Öffnungsmitnehmers in einer Parkposition frei bewegt werden.

Während bei einem Öffnungsvorgang des bewegbare Möbelteil über den Öffnungsaktivator mit der Einzugsvorrichtung gekoppelt ist, wird bei einer Schließbewegung der beabstandet von Öffnungsaktivator angeordnete Aktivator mit dem Mitnehmer gekoppelt. Dadurch ergeben sich beim Öffnen und Schließen unterschiedliche Kraft- und Bewegungsabläufe.

Vorzugsweise ist das Übersetzungsgetriebe mit mindestens einem Seilzug versehen, der entlang einer drehbaren Scheibe aufwickelbar ist. Um ein flexibles Übersetzungsverhältnis zu erhalten, kann an der Scheibe mindestens eine Wickelkante für einen Seilzug ausgebildet sein, die einen zur Drehachse der Scheibe sich ändernden Radius aufweist. Vorzugsweise sind an gegenüberliegenden Seiten der Scheibe Wickelkanten ausgebildet, eine Wickelkante für einen Seilzug zur Kopplung der Scheibe mit dem Mitnehmer und auf der gegenüberliegenden Seite eine Wickelkante für einen Seilzug zur Kopplung mit dem Öffnungsmitnehmer.

Es ist jedoch auch möglich ein Übersetzungsgetriebe auf Basis von Zahnstangen und unrunden Zahnrädern zu nutzen, wobei die Zähne entlang einer Kurve angeordnet sind, die mit einem nicht konstanten Abstand zur Drehachse des Zahnrades verläuft und somit das Verhältnis von Winkelgeschwindigkeit zur Lineargeschwindigkeit der Zahnstange variiert. Ein solches progressives Getriebe ist beispielsweise in der EP 1 988 003 A2 gezeigt. Der Einsatz eines solchen progressiven Getriebes bevorzugt mit Getriebeteilen aus Kunststoff ist insbesondere für Geschirrspüler vorteilhaft, da dort aggressive Medien vorhanden sind. Auch hier kann das Übersetzungsverhältnis sich über die Wegstrecke ändern.

Die erfindungsgemäße Einzugsvorrichtung wird vorzugsweise für Auszugsführungen verwendet, die Schubkästen für Möbel oder Schubelemente für Haushaltsgeräte, wie Drahtkörbe, Tragböden, Kunststoffbehälter in einer Einzugsposition vorspannen. Dabei können die beiden Führungsbahnen vorzugsweise stationär angeordnet sein, während der Öffnungsaktivator und der Aktivator an einer bewegbaren Schiene der Auszugsführung oder am Schubkasten bzw. Ablageelement festgelegt sind, so dass sich ein kompakter Aufbau ergibt. In der weiteren Beschreibung wird nur das bewegbare Möbelteil erwähnt, die Ausführungen gelten aber analog auch für schienengeführte Schubelemente in Haushaltsgeräten.

Bei dem erfindungsgemäßen Verfahren zum Öffnen und Schließen eines bewegbaren Möbelteils und zum Spannen und Entspannen einer Einzugsvorrichtung wird zunächst das bewegbare Möbelteil von der Schließposition in Öffnungsrichtung bewegt, wobei ein Öffnungsmitnehmer über ein Übersetzungsgetriebe einen Mitnehmer in Öffnungsrichtung bewegt, der durch einen Kraftspeicher in eine Schließposition vorgespannt ist, wobei der Öffnungsmitnehmer schneller bewegt wird als der Mitnehmer. Anschließend werden der Mitnehmer und der Öffnungsmitnehmer in einer Parkposition geparkt und das bewegbare Möbelteil von der Einzugsvorrichtung entkoppelt. Wird das bewegbare Möbelteil in Schließrichtung bewegt, gelangt ein Aktivator mit dem Mitnehmer in Eingriff, der über den Kraftspeicher das bewegbare Möbelteil und den Öffnungsaktivator in Schließrichtung bewegt. Dadurch können Öffnungs- und Schließbewegung hinsichtlich der Wegstrecke und der beim Öffnen und Schließen wirkenden Kräfte bedienungsfreundlich gestaltet werden. Zusätzlich kann optional in Schließrichtung ein Dämpfer wirken, um das bewegbare Möbelteil vor Erreichen der Schließposition abzubremsen.

Die Erfindung wird nachfolgend anhand eines Ausführungsbeispiels mit Bezug auf die beigefügten Zeichnungen näher erläutert. Es zeigen:

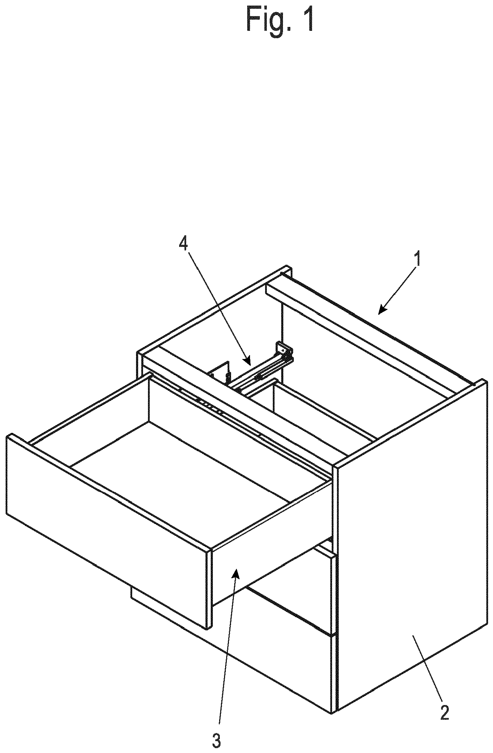

- Figur 1: ein Möbel mit einer erfindungsgemäßen Einzugsvorrichtung;
- Figur 2: eine Auszugsführung mit einer erfindungsgemäßen Einzugsvorrichtung;
- Figur 3: eine perspektivische Explosionsdarstellung einer erfindungsgemäßen Einzugsvorrichtung;
- Figuren 4A: eine Vorderansicht der Einzugsvorrichtung der Figur 2;
- Figur 4B: eine Schnittdarstellung der Figur 4A;
- Figuren 5A und 5B: zwei Ansichten der Einzugsvorrichtung der Figur 2 in einer Schließposition;
- Figuren 6 bis 9: mehrere Ansichten der Einzugsvorrichtung bei einer Öffnungsbewegung der Auszugsführung;
- Figuren 10A und 10B: zwei Ansichten der Einzugsvorrichtung in einer Draufsicht;
- Figuren 11A und 11B: zwei Ansichten der Einzugsvorrichtung in einer Unteransicht;
- Figur 12: ein Diagramm zur Darstellung des linearen Weges der Seilzüge relativ zum Drehwinkel einer Scheibe des Übersetzungsgetriebes, und
- Figur 13: ein Kraft-Weg-Diagramm zur Darstellung der Öffnungs- und Schließbewegung.

Ein Möbel 1 umfasst einen Möbelkorpus 2, an dem mehrere Schubelemente 3 in Form von Schubkästen verfahrbar gelagert sind. Hierfür sind an dem Möbelkorpus 2 Auszugsführungen 4 festgelegt, die eine Bewegung der Schubelemente 3 von einer Schließposition in Öffnungsrichtung und zurück ermöglichen. Statt an einen Möbel 1 kann ein Schubelement 3 auch an einem Haushaltsgerät, wie einem Geschirrspüler oder einen Kühlgerät, angeordnet sein.

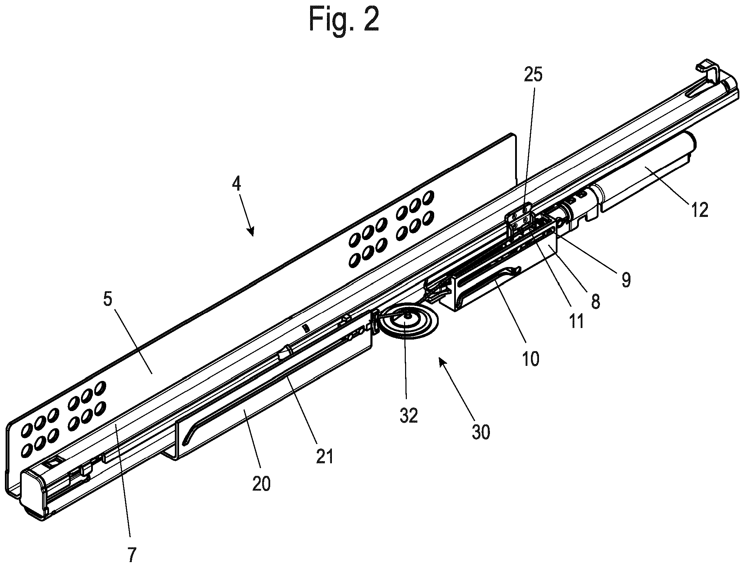

In Figur 2 ist eine Auszugsführung 4 mit einer Einzugsvorrichtung gezeigt. Die Auszugsführung 4 umfasst eine stationäre Führungsschiene 5, die am Möbelkorpus 2 fixierbar ist. An der Führungsschiene 5 ist über die Zwischenschaltung einer Mittelschiene 6 eine Laufschiene 7 verfahrbar gelagert, an der das Schubelement 3 festlegbar ist.

Die Einzugsvorrichtung umfasst ein erstes Führungsgehäuse 8, an dem zwei Führungsbahnen 9 und 10 ausgebildet sind, um einen Mitnehmer 11 zu führen. Der Mitnehmer 11 ist über eine bestimmte Wegstrecke mit einem Aktivator 25 koppelbar, der an der Laufschiene 7 festgelegt ist. Ferner umfasst die Einzugsvorrichtung ein zweites Führungsgehäuse 20, an dem eine zweite Führungsbahn 21 ausgebildet ist.

Der Mitnehmer 11 ist über einen Kraftspeicher in eine Schließposition vorgespannt, wobei der Kraftspeicher in einer Patrone 12 angeordnet ist. In der Patrone 12 kann zusätzlich ein Dämpfer, insbesondere ein Lineardämpfer, vorgesehen sein, um eine Schließbewegung des bewegbaren Möbelteils und des Mitnehmers 11 vor Erreichen der Schließposition abzubremsen. Die Schließposition des Schubelementes 3 entspricht dabei der Einzugsposition des Mitnehmers 11, der zwischen der Einzugsposition und einer Parkposition bewegbar ist.

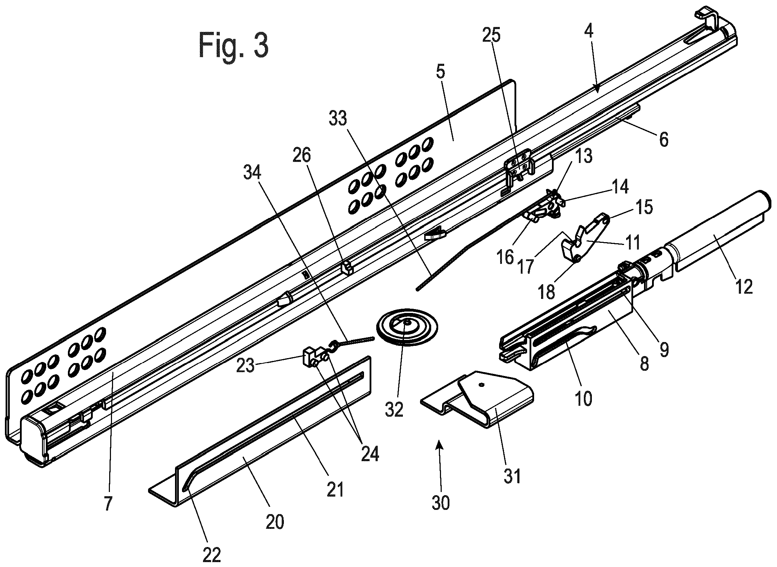

In Figur 3 ist die Einzugsvorrichtung im Detail dargestellt. Der Mitnehmer 11 ist mit einem Verbindungsstück 13 verbunden, an dem ein Ende eines Seilzuges 33 fixiert ist. Das Verbindungsstück 13 und der Mitnehmer 11 sind zusammen an dem ersten Führungsgehäuse 8 bewegbar. Ein Zapfen 14 des Verbindungsstückes 13 durchgreift eine Öffnung 15 an dem Mitnehmer 11 und ist in der oberen Führungsbahn 9 geführt. Zudem ist ein weiterer Zapfen 16 an dem Verbindungsstück 13 in der linearen Führungsbahn 9 angeordnet, so dass das Verbindungsstück 13 nur linear entlang der Führungsbahn 9 bewegbar ist.

An dem Mitnehmer 11 ist eine Aufnahme 17 ausgebildet, in die der Zapfen 16 des Verbindungsstückes 13 einfügbar ist. Ferner ist der Mitnehmer 11 mit einem hervorstehenden Zapfen 18 in einer zweiten Führungsbahn 10 an dem ersten Führungsgehäuse 8 verfahrbar. Die zweite Führungsbahn 10 umfasst auf der in Öffnungsrichtung gesehen vorne liegenden Seite einen abgewinkelten Endabschnitt, an dem der Mitnehmer 11 verschwenkt und gegen die Kraft eines Kraftspeichers in der Patrone 12 verrastet werden kann. Der Mitnehmer 11 ist somit zwischen der Parkposition mit gespanntem Kraftspeicher und einer Einzugsposition mit weitgehend entspanntem Kraftspeicher bewegbar.

An dem zweiten Führungsgehäuse 20 mit der zweiten Führungsbahn 21 ist ein Öffnungsmitnehmer 23 bewegbar, der über zwei voneinander beabstandete Zapfen 24 in der Führungsbahn 21 verfahrbar gehalten ist. Die Führungsbahn 21 umfasst auf der in Öffnungsrichtung vorne liegenden Seite einen abgewinkelten Endabschnitt 22, an dem der Öffnungsmitnehmer 23 verschwenkbar ist, um eine Kopplung zwischen einem Öffnungsaktivator 26 an der Laufschiene 7 und dem Öffnungsmitnehmer 23 zu entkoppeln. Der Öffnungsmitnehmer 23 ist ebenfalls zwischen einer Einzugsposition und einer Parkposition verfahrbar.

Der Mitnehmer 11 und der Öffnungsmitnehmer 23 sind über ein Übersetzungsgetriebe 30 miteinander verbunden. Das Übersetzungsgetriebe 30 umfasst eine drehbar gelagerte Scheibe 32, die an einem Halter 31 stationär angeordnet ist, wobei der Halter 31 beispielsweise an der Führungsschiene 5 festgelegt ist. Die drehbare Scheibe 32 weist an gegenüberliegenden Seiten Wickelkanten auf, und bei einer Drehbewegung der Scheibe 32 kann ein Seilzug 33 oder 34 auf- oder abgewickelt werden. Die Wickelkanten weisen dabei einen unterschiedlichen Radius zur Drehachse auf, so dass sich die Geschwindigkeit beim Auf- oder Abwickeln der beiden Seilzüge 33 oder 34 unterscheiden. Optional kann mindestens eine Wickelkante oder ein Kern zum Aufwickeln eines der Seilzüge 33 oder 34 auch einen konstanten Durchmesser aufweisen. Die Scheibe 32 kann zum Aufwickeln der Seilzüge 33 und 34 mehrfach gedreht werden, beispielweise um 1,5 bis vier Umdrehungen.

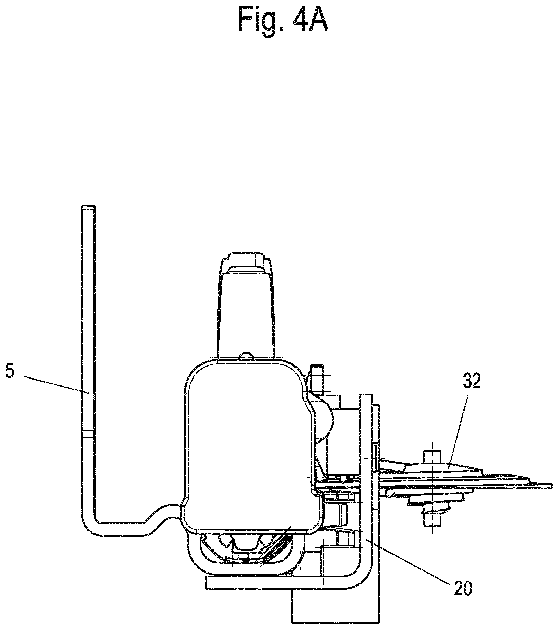

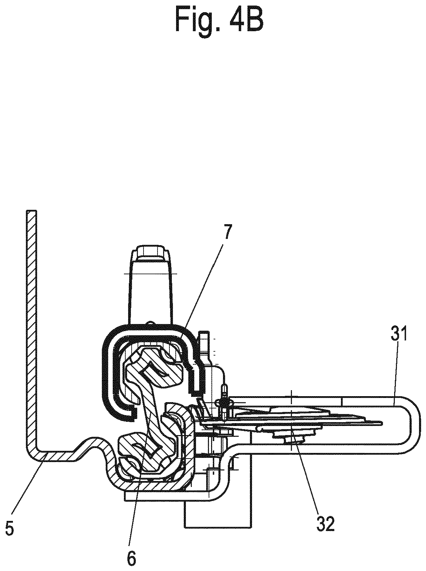

In Figur 4A ist die Auszugsführung in einer Vorderansicht gezeigt, und es ist erkennbar, dass das zweite Führungsgehäuse 20 winkelförmig ausgebildet ist und an einer Unterseite an der Führungsschiene 5 fixiert ist. In der Schnittdarstellung in Figur 4B ist der Bereich der Seilscheibenbefestigung gezeigt. Die Scheibe 32 besitzt eine vertikale Drehachse, wobei auch andere Ausrichtungen der Scheibe 32 möglich sind. Die Scheibe 32 ist dabei an einem U-förmigen Halter 31 fixiert, der ebenfalls an der Führungsschiene 5 festgelegt ist. Auch das erste Führungsgehäuse 8 kann an der Führungsschiene 5 festgelegt sein.

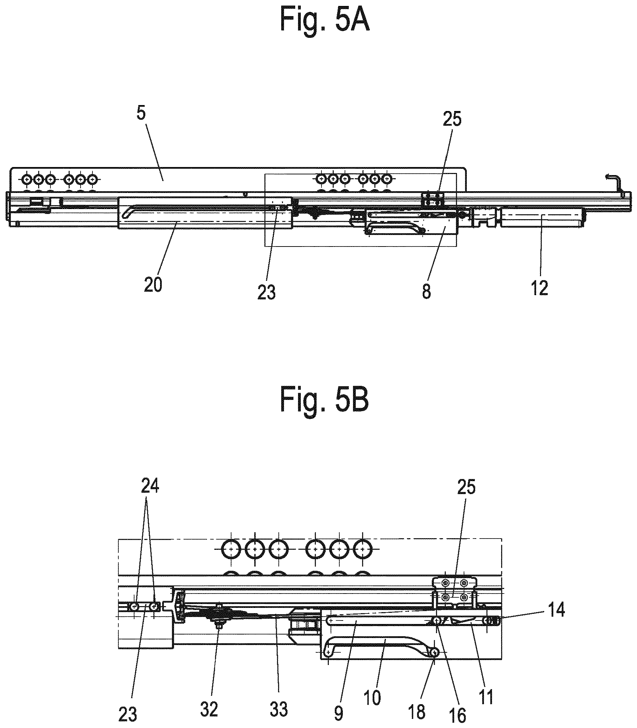

In den Figuren 5A und 5B ist die Einzugsvorrichtung in einer Schließposition des bewegbaren Möbelteils und in einer Einzugsposition für den Mitnehmer 11 gezeigt. Der Mitnehmer 11 ist über den Aktivator 25 nur in Schließrichtung beaufschlagbar, während der Aktivator 25 relativ zu dem Mitnehmer 11 in Öffnungsrichtung frei beweglich ist. Der Mitnehmer 11 befindet sich in der Einzugsposition in einer verschwenkten Position, in der eine in Öffnungsrichtung vordere Seite von dem Aktivator 25 weg bewegt wurde, da sich der Zapfen 18 bei einer Schließbewegung entlang der Führungsbahn 10 abgesenkt hat und dadurch der Aktivator 25 in Öffnungsrichtung entkoppelt ist. Der Öffnungsmitnehmer 23 ist mit dem Öffnungsaktivator 26 gekoppelt, d.h. eine Kontaktfläche des Öffnungsmitnehmers 23 liegt an dem Öffnungsaktivator 26 an und zieht diesen in Schließrichtung, wobei der Öffnungsmitnehmer 23 über das Übersetzungsgetriebe 30 und den Mitnehmer 11 mit dem Kraftspeicher in der Patrone 12 gekoppelt ist.

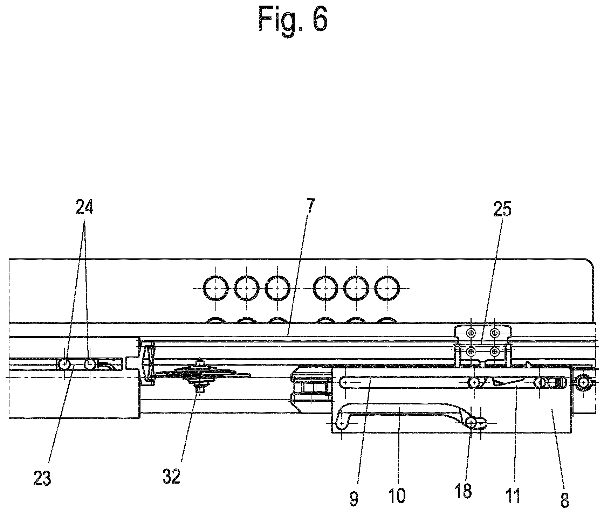

Wird nun das bewegbare Möbelteil in Öffnungsrichtung bewegt, beispielsweise durch eine Zugbewegung am Schubkasten, zieht der Öffnungsaktivtor 26 an dem Öffnungsmitnehmer 23, der über das Übersetzungsgetriebe 30 die drehbare Scheibe 32 dreht und auch den Mitnehmer 11 geringfügig in Öffnungsrichtung bewegt. Durch das Übersetzungsgetriebe 30 bewegt sich der Öffnungsmitnehmer 23 um eine größere Wegstrecke als der Mitnehmer 11, wie dies auch im Vergleich der Figuren 5B und 6 gezeigt ist. Der Aktivator 25 bewegt sich mit der gleichen Geschwindigkeit wie der Öffnungsaktivator 26, da beide an der Laufschiene 5 festgelegt sind.

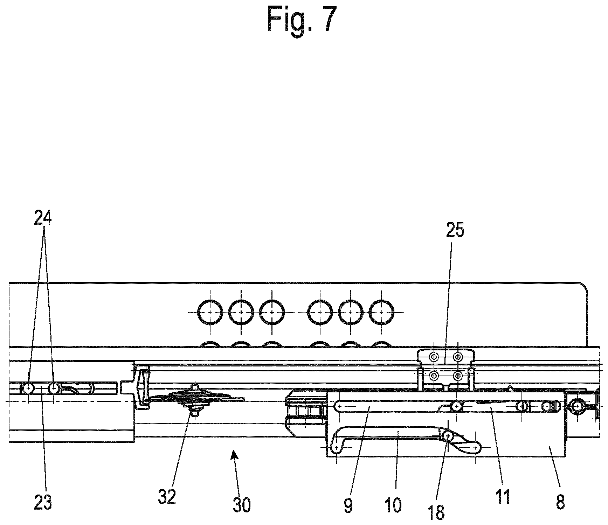

Der Mitnehmer 11 wird entlang der beiden Führungsbahnen 9 und 10 bewegt, wobei der Mitnehmer 11 nach einer kurzen Startphase verschwenkt wird, wie dies im Vergleich der Figuren 6 und 7 zeigt. Die Schwenkbewegung erfolgt, dadurch, dass sich der Zapfen 18 in der Führungsbahn 10 zu dem Aktivator 25 hin bewegt, allerdings an einer Position, an der der Aktivator 25 schon benachbart zu dem Mitnehmer 11 angeordnet ist, und somit kein Eingriff mehr zwischen dem Aktivator 25 und dem Mitnehmer 11 vorgenommen wird. Die Bewegung des Mitnehmers 11 erfolgt aufgrund einer Zugbewegung durch den Öffnungsmitnehmer 23, der durch den Öffnungsaktivator 26 in Öffnungsrichtung bewegt wird. Über das Übersetzungsgetriebe 30 wird der Öffnungsmitnehmer 23 schneller in Öffnungsrichtung bewegt als der Mitnehmer 11.

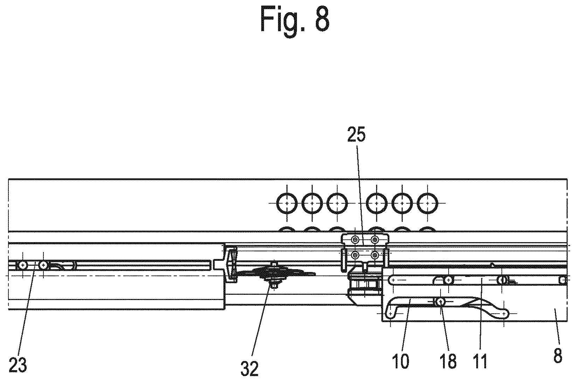

In Figur 8 ist der Öffnungsmitnehmer 23 über eine deutlich längere Wegstrecke als der Mitnehmer 11 verfahren worden, die beispielsweise mehr als doppelt so lang ist. Dadurch sind die beim Öffnen aufzuwendenden Kräfte zur Überwindung des Kraftspeichers, der auf den Mitnehmer 11 wirkt, entsprechend geringer.

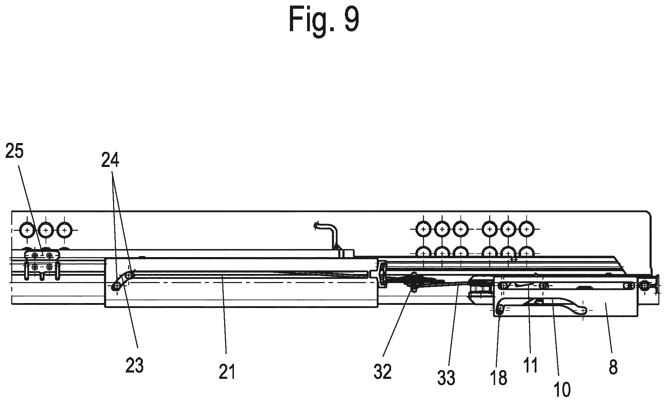

In Figur 9 ist der Öffnungsmitnehmer 23 in eine Parkposition verfahren worden, in der der Öffnungsmitnehmer 23 an dem abgewinkelten Endabschnitt 22 angeordnet ist. Dadurch verschwenkt der Öffnungsmitnehmer 23 und entkoppelt eine Verbindung mit dem Öffnungsaktivator 26, der daraufhin frei beweglich in Öffnungsrichtung ist. In der Parkposition des Öffnungsmitnehmers 23 an dem abgewinkelten Endabschnitt 22 ist zeitgleich auch der Mitnehmer 11 in der Parkposition angekommen, in der der Zapfen 18 an dem abgewinkelten Endabschnitt der Führungsbahn 10 angeordnet ist. Der Mitnehmer 11 ist dabei durch den Kraftspeicher in der Patrone 12 in der Parkposition mit gespanntem Kraftspeicher verrastet. Der Kraftspeicher kann dabei als Druck- oder Zugfeder oder als anderes Federelement ausgebildet sein.

Wird das bewegbare Möbelteil nun in Schließrichtung bewegt, kann der Öffnungsaktivator 26 an dem Öffnungsmitnehmer 23 vorbei bewegt werden, da dieser noch in der Parkposition angeordnet ist und somit ein Passieren des Öffnungsaktivators 26 zulässt. Das bewegbare Möbelteil und die Laufschiene 7 können in Schließrichtung bewegt werden, bis der Aktivator 25 in Eingriff mit dem verschwenkten Mitnehmer 11 gelangt, der diesen aus der Parkposition heraus bewegt und verschwenkt, so dass nun der Mitnehmer 11 zusammen mit dem Aktivator 25 bewegt wird. Die Kopplung des Aktivators 25 ermöglicht ein Abbremsen der Laufschiene 7 über einen Dämpfer in der Patrone 12, um laute Anschlaggeräusche zu vermeiden. Beim Bewegen des Mitnehmers 11 in Schließrichtung wird zeitgleich auch der Öffnungsmitnehmer 23 aus der Parkposition an dem abgewinkelten Endabschnitt 22 bewegt, der nun ebenfalls in Schließrichtung bewegt wird. Der Mitnehmer 11 zieht dabei über das Übersetzungsgetriebe 30 den Öffnungsmitnehmer 23, der sich wieder mit größerer Geschwindigkeit in Schließrichtung bewegt, allerdings beeinflusst dies nicht die Schließkräfte, da der Öffnungsaktivator 26 noch beabstandet von dem Öffnungsmitnehmer 23 ist. Erst kurz vor Erreichen der Schließposition wird der Mitnehmer 11 verschwenkt, und durch das Verschwenken wird der Aktivator 25 in Öffnungsrichtung wieder freigegeben, wie dies in Figur 6 gezeigt ist. In dieser Position kann der Öffnungsmitnehmer 23 in Eingriff mit dem Öffnungsaktivator 26 gelangen und zieht dann die Laufschiene 7 die letzte Wegstrecke in die Schließ- und Einzugsposition, die in den Figuren 5A und 5B gezeigt ist.

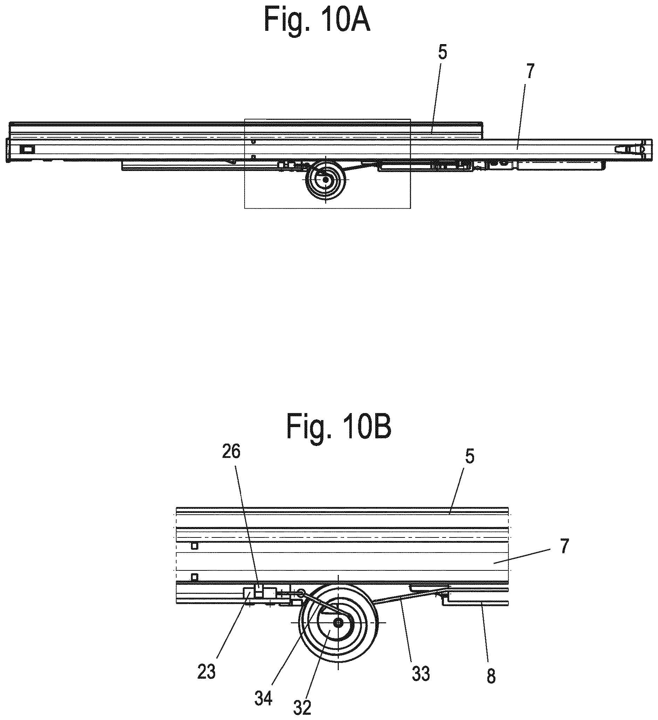

In den Figuren 10A und 10B ist eine Draufsicht auf die drehbare Scheibe 32 des Übersetzungsgetriebes 30 gezeigt. Es ist erkennbar, dass der Seilzug 34, der den Öffnungsmitnehmer 23 mit der drehbar gelagerten Scheibe 32 koppelt, auf einer Wickelkante auf- und abwickelbar ist, die gegenüber der Drehachse einen sich ändernden Radius aufweist.

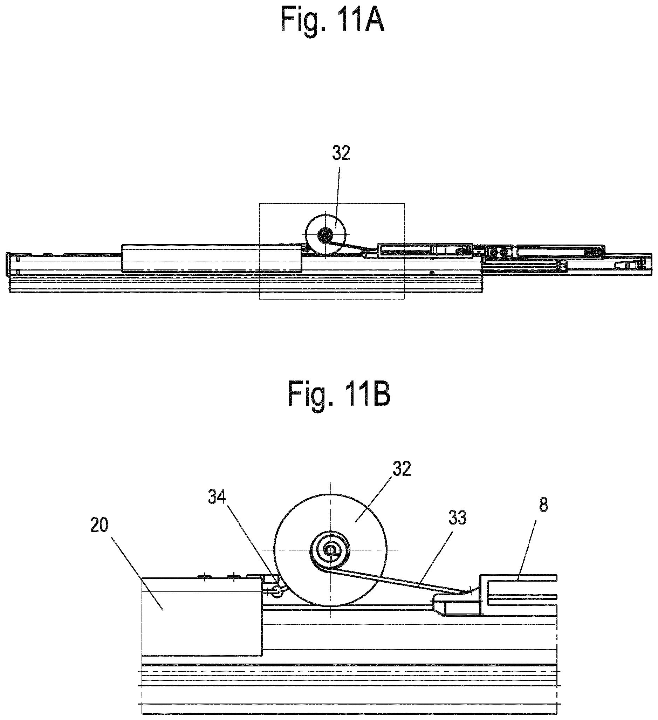

In den Figuren 11A und 11B ist eine Unterseite der Scheibe 32 gezeigt, auf der ebenfalls eine Wickelkante ausgebildet ist, um den Seilzug 33 auf- und abzuwickeln, der eine Verbindung zwischen der drehbaren Scheibe 32 und dem Mitnehmer 11 herstellt. Die Wickelkanten besitzen einen unterschiedlichen Radius und können somit verschiedene Übersetzungsverhältnisse bereitstellen, die sich auch über die Wegstrecke des Mitnehmers 11 und des Öffnungsmitnehmers 23 ändern können.

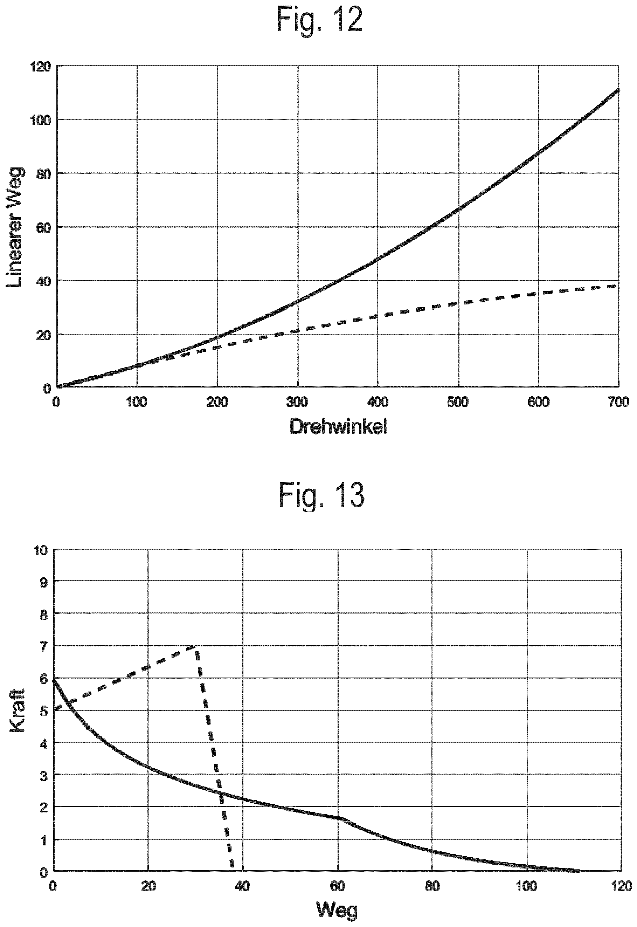

In Figur 12 ist ein Diagramm eines möglichen Übersetzungsverhältnisses zwischen einem Drehwinkel der Scheibe 32 und den beiden Seilzügen 33 und 34 dargestellt, die einen linearen Weg zurücklegen. Die gestrichelte Linie stellt den Seilzug 33 dar, der im Wesentlichen proportional zum Drehwinkel auf- oder abgewickelt wird. Die durchgezogene Linie stellt das Verhältnis zwischen Drehwinkel der Scheibe und dem Seilzug 34 dar. Wie erkennbar ist, wird der lineare Weg des Seilzuges zum Ende des Drehwinkels hin deutlich größer, d.h. bei konstanter Drehwinkelgeschwindigkeit steigt die Geschwindigkeit des Seilzuges 34 an. Gleichermaßen werden die zum Spannen des Kraftspeichers benötigten Kräfte reduziert.

In Figur 13 sind daher die auf die Laufschienen 7 wirkenden Kräfte beim Öffnen und Schließen dargestellt. Bei einer Öffnungsbewegung wird gemäß der durchgezogenen Linie die Kraft zum Öffnen reduziert durch das Übersetzungsgetriebe, wobei die Wegstrecke zum Spannen der Einzugsvorrichtung mehr als doppelt so lang ist als die Wegstrecke beim Schließen der Einzugsvorrichtung. Die Länge des Spannvorganges der Einzugsvorrichtung liegt beispielsweise in einem Bereich zwischen 8 cm bis 14 cm, insbesondere 9 cm bis 12 cm. Die Länge der Wegstrecke beim Einziehen des Schubelementes 3 in die Schließposition beträgt vorzugsweise zwischen 2 cm bis 6 cm.

Bei einem Schließvorgang wird die Einzugsvorrichtung erst bei einer Wegstrecke von etwa 30 bis 50 mm vor der Schließposition wirksam, wie dies die gestrichelte Linie darstellt. Die Einzugsvorrichtung wird zunächst aktiviert, indem der Mitnehmer 11 aus der Parkposition entriegelt wird. Sobald eine entsprechende Entriegelung stattgefunden hat, wird der Aktivator 25 in Einzugsrichtung gezogen, wobei die Kraft in Einzugsrichtung abnimmt, da sich der Kraftspeicher bei einer Bewegung in Schließrichtung geringfügig entspannt. Die gewählten Übersetzungsverhältnisse beim Öffnen und Schließen können natürlich durch den Fachmann modifiziert werden.

Sowohl die Länge des Spannvorganges als auch die Länge der Einzugsstrecke beim Schließen können verändert werden. Auch das Übersetzungsverhältnis kann angepasst werden, wobei nach Möglichkeit der Benutzer beim Öffnen des bewegbaren Möbelteils keine abrupten Kraftsprünge mehr spürt.

### Bezugszeichenliste

- 1: Möbel
- 2: Möbelkorpus
- 3: Schubelement
- 4: Auszugsführung
- 5: Führungsschiene
- 6: Mittelschiene
- 7: Laufschiene
- 8: Führungsgehäuse
- 9: Führungsbahn
- 10: Führungsbahn
- 11: Mitnehmer
- 12: Patrone
- 13: Verbindungsstück
- 14: Zapfen
- 15: Öffnung
- 16: Zapfen
- 17: Aufnahme
- 18: Zapfen
- 20: Führungsgehäuse
- 21: Führungsbahn
- 22: Endabschnitt
- 23: Öffnungsmitnehmer
- 24: Zapfen
- 25: Aktivator
- 26: Öffnungsaktivator
- 30: Übersetzungsgetriebe
- 31: Halter
- 32: Scheibe
- 33: Seilzug
- 34: Seilzug

## Patentansprüche

1. Einzugsvorrichtung für bewegbare Möbelteile (3), mit einem entlang einer ersten Führungsbahn (10) bewegbaren Mitnehmer (11), der zwischen einer Einzugsposition und einer Parkposition bewegbar ist und unmittelbar oder mittelbar durch einen Kraftspeicher in die Einzugsposition vorgespannt ist, wobei der Mitnehmer (11) mit einem Aktivator (25) koppelbar ist, um das bewegbare Möbelteil (3) in eine Schließposition zu bewegen, wobei einen entlang einer zweiten Führungsbahn (21) bewegbaren Öffnungsmitnehmer (23), der über ein Übersetzungsgetriebe (30) mit dem Mitnehmer (11) gekoppelt ist, und der Öffnungsmitnehmer (23) mit einem Öffnungsaktivator (26) koppelbar ist, der den Öffnungsmitnehmer (23) bei einer Öffnungsbewegung in Öffnungsrichtung entlang der zweiten Führungsbahn (21) verfährt, wobei die Wegstrecke des Öffnungsmitnehmers (23) länger ist als die des Mitnehmers (11), **dadurch gekennzeichnet, dass** das Übersetzungsgetriebe (30) ein Getriebe mit über die Bewegung des Öffnungsmitnehmers (23) veränderlicher Übersetzung ist.

2. Einzugsvorrichtung nach Anspruch 1, **dadurch gekennzeichnet, dass** bei einer konstanten Bewegung des Öffnungsmitnehmers (23) in Öffnungsrichtung die Bewegung des Mitnehmers (11) von der Einzugsposition in die Parkposition langsamer wird.

3. Einzugsvorrichtung nach Anspruch 2, **dadurch gekennzeichnet, dass** bei konstanter Bewegung des Öffnungsmitnehmers (23) in Öffnungsrichtung die Bewegung des Mitnehmers (11) von der Einzugsposition in die Parkposition aufgrund des sich ändernden Übersetzungsverhältnisses um mindestens 50 % langsamer wird.

4. Einzugsvorrichtung nach einem der vorhergehenden Ansprüche, **dadurch gekennzeichnet, dass** die zweite Führungsbahn (21) einen linearen Abschnitt und einen abgewinkelten Abschnitt aufweist und bei Anordnung des Öffnungsmitnehmers (23) an dem abgewinkelten Abschnitt der Öffnungsaktivator (26) von dem Öffnungsmitnehmer (23) entkoppelt und der Mitnehmer (11) in der Parkposition angeordnet ist.

5. Einzugsvorrichtung nach einem der vorhergehenden Ansprüche, **dadurch gekennzeichnet, dass** das Übersetzungsgetriebe (30) mindestens einen Seilzug (33, 34) umfasst, der entlang einer drehbaren Scheibe (32) aufwickelbar ist.

6. Einzugsvorrichtung nach Anspruch 5, **dadurch gekennzeichnet, dass** an der Scheibe (32) eine Wickelkante für den Seilzug (33, 34) ausgebildet ist, die einen zur Drehachse der Scheibe sich ändernden Radius aufweist.

7. Einzugsvorrichtung nach Anspruch 1 bis 4, **dadurch gekennzeichnet, dass** das Übersetzungsgetriebe (30) mindestens eine Zahnstange umfasst, die entlang mindestens eines unrunden Zahnrades abläuft.

8. Einzugsvorrichtung nach Anspruch 7, **dadurch gekennzeichnet, dass** die Zähne des mindestens einen Zahnrades entlang einer Kurve angeordnet sind, die mit einem nicht konstanten Abstand zur Drehachse des Zahnrades verläuft.

9. Einzugsvorrichtung nach einem der vorhergehenden Ansprüche, **dadurch gekennzeichnet, dass** bei einer Schließbewegung des bewegbaren Möbelteils (3) der Aktivator (25) den Mitnehmer (11) aus der Parkposition bewegt und der Mitnehmer (11) den Aktivator (25) durch die Kraft des Kraftspeichers in die Einzugsposition bewegt.

10. Einzugsvorrichtung nach einem der vorhergehenden Ansprüche, **dadurch gekennzeichnet, dass** der Aktivator (25) in der Einzugsposition gegenüber dem Mitnehmer (11) in Öffnungsrichtung frei beweglich ist.

11. Auszugsführung (4) mit mindestens zwei relativ zueinander verfahrbaren Schienen (5, 6, 7) mit einer Einzugsvorrichtung nach einem der vorhergehenden Ansprüche.

12. Auszugsführung nach Anspruch 11, **dadurch gekennzeichnet, dass** die beiden Führungsbahnen (10, 21) stationär angeordnet sind und der Öffnungsaktivator (26) und der Aktivator (25) an der bewegbaren Schiene (5, 6, 7) der Auszugsführung (4) oder an dem bewegbaren Möbelteil (3) festgelegt sind.

13. Verfahren zum Öffnen und Schließen eines bewegbaren Möbelteils (3) und zum Spannen einer Einzugsvorrichtung nach Anspruch 1, mit den folgenden Schritten:
- Bewegen des bewegbaren Möbelteils (3) von einer Schließposition in Öffnungsrichtung, wobei ein Öffnungsmitnehmer (23) über ein Übersetzungsgetriebe (30) einen Mitnehmer (11) in Öffnungsrichtung bewegt, der durch einen Kraftspeicher in Schließrichtung vorgespannt ist, wobei der Öffnungsmitnehmer (23) schneller bewegt wird als der Mitnehmer (11);
- Parken des Mitnehmers (11) und des Öffnungsmitnehmers (23) jeweils in einer Parkposition und Entkoppeln des bewegbaren Möbelteils (3) von der Einzugsvorrichtung, und
- Bewegen des Möbelteils (3) in Schließrichtung, wobei ein Aktivator (25) mit dem Mitnehmer (11) gekoppelt wird, der über den Kraftspeicher das bewegbare Möbelteil (3) und den Öffnungsaktivator (26) in Schließrichtung bewegt;
**dadurch gekennzeichnet, dass** beim Bewegen des Öffnungsmitnehmers (26) mit konstanter Geschwindigkeit von der Einzugsposition in die Parkposition sich die Geschwindigkeit des Mitnehmers (11) reduziert.

## Claims

1. Retraction device for movable furniture parts (3), having a driver (11) which can be moved along a first guide path (10), can be moved between a retraction position and a parked position and is directly or indirectly pretensioned into the retraction position by an energy storage device, wherein the driver (11) can be coupled to an activator (25) in order to move the movable furniture part (3) into a closed position, whereby an opening driver (23) which is movable along a second guide path (21) and is coupled to the driver (11) via a transmission gear (30), and the opening driver (23) can be coupled to an opening activator (26) which moves the opening driver (23) along the second guide path (21) in the opening direction during an opening movement, wherein the distance traveled by the opening driver (23) is longer than that of the driver (11), **characterized in that** the transmission gear (30) is a gear with a transmission ratio which can be varied via the movement of the opening driver (23).

2. Retraction device according to claim 1, **characterized in that** with a constant movement of the opening driver (23) in the opening direction, the movement of the driver (11) from the retraction position to the parked position becomes slower.

3. Retraction device according to claim 2, **characterized in that** with constant movement of the opening driver (23) in the opening direction, the movement of the driver (11) from the retracted position to the parked position is slowed down by at least 50% due to the changing transmission ratio.

4. Retraction device according to one of the preceding claims, **characterized in that** the second guide path (21) has a linear section and an angled section and, when the opening driver (23) is arranged on the angled section, the opening activator (26) is decoupled from the opening driver (23) and the driver (11) is arranged in the parked position.

5. Retraction device according to one of the preceding claims, **characterized in that** the transmission gear (30) comprises at least one cable pull (33, 34) which can be wound up along a rotatable disc (32).

6. Retraction device according to claim 5, **characterized in that** a winding edge for the cable pull (33, 34) is formed on the disc (32), said winding edge having a radius which varies relative to the axis of rotation of the disc.

7. Retraction device according to claim 1 to 4, **characterized in that** the transmission gear (30) comprises at least one rack which runs along at least one non-circular gear.

8. Retraction device according to claim 7, **characterized in that** the teeth of the at least one gear are arranged along a curve which extends at a non-constant distance from the axis of rotation of the gear.

9. Retraction device according to one of the preceding claims, **characterized in that** during a closing movement of the movable furniture part (3), the activator (25) moves the driver (11) out of the parked position and the driver (11) moves the activator (25) into the retracted position by the force of the energy storage device.

10. Retraction device according to one of the preceding claims, **characterized in that** the activator (25) in the retraction position is freely movable in the opening direction relative to the driver (11).

11. Pull-out guide (4) having at least two rails (5, 6, 7) movable relative to one another with a retraction device according to one of the preceding claims.

12. Pull-out guide according to claim 11, **characterized in that** the two guide paths (10, 21) are arranged in a stationary manner and the opening activator (26) and the activator (25) are fixed to the movable rail (5, 6, 7) of the pull-out guide (4) or to the movable furniture part (3).

13. Method for opening and closing a movable furniture part (3) and for clamping a retraction device according to claim 1, comprising the following steps:
- moving the movable furniture part (3) from a closed position in the opening direction, wherein an opening driver (23) moves a driver (11) in the opening direction via a transmission gear (30), the driver (11) being pretensioned in the closing direction by an energy storage device, wherein the opening driver (23) is moved faster than the driver (11);
- parking of the driver (11) and the opening driver (23) in each case in a parked position and decoupling of the movable furniture part (3) from the retraction device, and
- moving the furniture part (3) in the closing direction, wherein an activator (25) is coupled to the driver (11), which via the energy storage device moves the movable furniture part (3) and the opening activator (26) in the closing direction,
**characterized in that** when the opening driver (26) is moved at constant speed from the retracted position to the parked position, the speed of the driver (11) is reduced.

## Revendications

1. Dispositif de rétraction pour des parties mobiles de meuble (3) comprenant :
- un organe d'entraînement (11) mobile le long d'un premier chemin de guidage (10), entre une position rétractée et une position d'attente et précontraint directement ou indirectement par un accumulateur de force en position de rétraction,
l'organe d'entraînement (11) étant couplé à un actionneur (25) pour déplacer la partie mobile de meuble (3) en position de fermeture,
- un organe d'entraînement à l'ouverture (23) mobile le long d'un second chemin de guidage (21), couplé à l'organe d'entraînement (11) par une transmission démultiplicatrice (30) et l'organe d'entraînement à l'ouverture (23) étant couplé à un actionneur d'ouverture (26) qui déplace l'organe d'entraînement à l'ouverture (23) pour un mouvement d'ouverture dans la direction d'ouverture le long du second chemin de guidage (21),
le trajet de l'organe d'entraînement à l'ouverture (23) étant plus long que l'organe d'entraînement (11),
dispositif **caractérisé en ce que**
la transmission démultiplicatrice (30) est une transmission à démultiplication variable suivant le mouvement de l'organe d'entraînement à l'ouverture (23).

2. Dispositif de rétraction selon la revendication 1,
**caractérisé en ce que**
le mouvement de l'organe d'entraînement (11) est plus lent entre la position de rétraction et la position de stationnement, pour un mouvement constant de l'organe d'entraînement à l'ouverture (23) dans la direction de l'ouverture.

3. Dispositif de rétraction selon la revendication 2,
**caractérisé en ce que**
le mouvement de l'organe d'entraînement (11) ralentit entre la position de rétraction et la position de stationnement du fait de la variation du rapport de démultiplication, en ralentissant d'au moins 50% pour un mouvement constant de l'organe d'entraînement à l'ouverture (23) dans la direction d'ouverture.

4. Dispositif de rétraction selon l'une des revendications précédentes,
**caractérisé en ce que**
le second chemin de guidage (21) comprend un segment linéaire et un segment coudé et pour le montage de l'organe d'entraînement à l'ouverture (23) sur le segment coudé, l'actionneur d'ouverture (26) est découplé de l'organe d'entraînement à l'ouverture (23) et l'organe d'entraînement (11) est en position d'attente.

5. Dispositif de rétraction selon l'une des revendications précédentes,
**caractérisé en ce que**
la transmission démultiplicatrice (30) comprend au moins un câble de traction (33, 34) qui s'enroule sur un disque tournant (32).

6. Dispositif de rétraction selon la revendication 5,
**caractérisé en ce que**
le disque (32) comporte une arête de bobine pour le câble (33, 34) dont le rayon varie par rapport à l'axe de rotation du disque.

7. Dispositif de rétraction selon les revendication 1 à 4,
**caractérisé en ce que**
la transmission démultiplicatrice (30) comprend au moins une crémaillère qui passe sur au moins une roue dentée non circulaire.

8. Dispositif de rétraction selon la revendication 7,
**caractérisé en ce que**
les dents d'au moins une roue dentée sont le long d'une courbe à distance non constante par rapport à l'axe de rotation de la roue dentée.

9. Dispositif de rétraction selon l'une des revendications précédentes,
**caractérisé en ce que**
lors d'un mouvement de fermeture de la partie mobile de meuble (3), l'actionneur (25) déplace l'organe d'entraînement (11) de sa position d'attente et l'organe d'entraînement (11) déplace l'actionneur (25) par la force de l'accumulateur de force en position de rétraction.

10. Dispositif de rétraction selon l'une des revendications précédentes,
**caractérisé en ce qu'**
en position de rétraction l'actionneur est mobile librement par rapport à l'organe d'entraînement (11) dans la direction d'ouverture.

11. Guide d'extraction (4) comportant au moins deux rails (5, 6, 7) mobiles l'un par rapport à l'autre avec un dispositif de rétraction selon l'une quelconque des revendications précédentes.

12. Guide d'extraction selon la revendication 11,
**caractérisé en ce que**
les deux chemins de guidage (10, 21) sont fixes et l'actionneur d'ouverture (26) et l'actionneur (25) sont fixés au rail mobile (5, 6, 7) du dispositif d'extraction (4) ou selon la partie mobile de meuble (3).

13. Procédé d'ouverture et de fermeture d'une partie mobile de meuble (3) et pour mettre en tension un dispositif de rétraction selon la revendication 1,
comprenant les étapes suivantes consistant à :
- déplacer la partie mobile de meuble (3) d'une position de fermeture dans la direction d'ouverture, un organe d'entraînement (23) étant déplacé par une transmission démultiplicatrice (30) avec un organe d'entraînement (11) dans la direction d'ouverture, en étant précontraint par un accumulateur de force dans la direction de fermeture, l'organe d'entraînement d'ouverture (23) étant déplacé plus rapidement que l'organe d'entraînement (11),
- stationner l'organe d'entraînement (11) et l'organe d'entraînement à l'ouverture (23) respectivement dans une position d'attente et une position de découplage de la partie mobile de meuble (3) avec le dispositif de rétraction, et
- déplacer la partie mobile de meuble (3) dans la direction de fermeture, un actionneur (25) étant couplé à l'organe d'entraînement (11) qui déplace, par l'intermédiaire de l'accumulateur de force, la partie mobile de meuble (3) et l'actionneur d'ouverture (26) dans la direction de fermeture,
procédé **caractérisé en ce que**
lors du déplacement de l'organe d'entraînement à l'ouverture (26) à vitesse constante dans la position de rétraction à la position de stationnement, la vitesse de l'organe d'entraînement (11) diminue.
